# EUROPEAN PATENT APPLICATION

(11) **EP 4 371 887 A1**
(43) Date of publication of application: **22.05.2024**
(21) Application number: 23211108.8
(22) Date of filing: 21.11.2023
(51) Int. Cl.: B64D 45/00, G01W 1/08

(54) **CONTRAIL DETECTION, DISCRIMINATION, AND CONTROL**

(30) Priority: 21.11.2022 US 202217991104
(71) Applicant: ROSEMOUNT AEROSPACE INC., Burnsville, MN 55306-4898 (US)
(72) Inventor: LINCOLN, David L., Cromwell, CT (US); WANG, Longke, Glastonbury, CT (US); SNYDER, Jordan A., West Hartford, CT (US); CASTILLO-GARZA, Rodrigo, West Hartford, CT (US); EMERSON, Sean C., Broad Brook, CT, 06016 (US); JACKSON, Darren G., Prior Lake, MN, 55372 (US); RAY, Mark D., Burnsville, MN, 55306 (US); ANDERSON, Kaare Josef, Farmington, MN, 55024 (US)
(74) Representative: Dehns

(57) **Abstract**

A system includes a first sensor (102) positioned to sense presence of a contrail in a first volume (104), wherein the first volume at least partially overlaps an expected volume of a contrail (106) proximate an aircraft. A second sensor (108) is positioned to sense a background reference in a second volume (110), where the second volume (110) does not overlap the expected volume of a contrail (106) proximate an aircraft. A controller (118) is operatively connected to the first and second sensors (102, 108). The controller (118) includes machine readable instructions configured to cause the controller (118) to utilize data input from both the first and second volumes (104, 110) to determine if a contrail is present from the aircraft. A system includes machine readable instructions configured to cause the controller (118) to predict persistence of contrails on an intended route through the volume of airspace and to determine an improved route and/or propulsion operation to reduce contrail formation and persistence relative to the intended route.

## Description

### BACKGROUND

### 1. Field

The present disclosure relates to contrails formed by aircraft, and more particularly to detection, discrimination, and mitigation of contrails.

### 2. Description of Related Art

Contrails from jet exhaust impact climate change via the formation of ice crystals in the atmosphere. Ice crystals from persistent contrails impact climate change via radiative forcing, which may have a net cooling or heating effect. NASA has recognized that for a given aircraft, contrail formation has a more immediate impact on climate change than carbon dioxide emissions. Monitoring and understanding contrails, along with control of contrails where possible, are important needs for reducing global warming.

The conventional techniques have been considered satisfactory for their intended purpose. However, there is an ever present need for improved systems and methods for detecting, discriminating, and controlling contrails from aircraft. This disclosure provides a solution for this need.

### SUMMARY

A system includes a first sensor positioned to sense presence of a contrail in a first volume, wherein the first volume at least partially overlaps an expected volume of a contrail proximate an aircraft. A second sensor is positioned to sense a background reference in a second volume, where the second volume does not overlap the expected volume of a contrail proximate an aircraft. A controller is operatively connected to the first and second sensors. The controller includes machine readable instructions configured to cause the controller to utilize data input from both the first and second volumes to determine if a contrail is present from the aircraft.

A third sensor can be positioned to sense presence of a contrail in a third volume, wherein the third volume at least partially overlaps the expected volume of a contrail at a position downstream in the contrail, and wherein the controller is operatively connected to the third sensor and includes machine readable instructions configured to cause the controller to predict persistence of a contrail, if present, based on comparison of data from the first and third volumes.

The controller can include machine readable instructions configured to cause the controller to predict persistence of a contrail, if present, based on data from the second volume. The machine readable instructions can be configured to cause the controller to receive additional sensor data and comparing data from the first and second volumes in conjunction with the additional sensor data to predict persistence of a contrail if present, wherein the additional data includes at least one of ambient temperature, humidity, pressure, particulate count information, and presence of polyaromatic hydrocarbons, wherein the additional data comes from sensors onboard the aircraft or from an external source.

The first sensor can include a first illuminator configured to illuminate the first volume and a first photodetector configured to receive a return from the first illuminator. The second sensor can include a second illuminator configured to illuminate the second volume and a second photodetector configured to receive a return from the second illuminator. The machine readable instructions can include instruction configured to convert time of flight data from the first and second sensors into data indicative of presence or lack of presence of particles. The first sensor can be an optical sensor, and the second sensor can be a non-optical sensor.

The first sensor can be directed in an aft direction relative to the aircraft so that the first volume is aft of the aircraft. The second sensor can be directed forward relative to the aircraft, starboard relative to the aircraft, port relative to the aircraft, above the aircraft, below the aircraft; and/or between two contrail zones aft of the aircraft.

A system includes a sensor configured to sense data indicative of atmospheric conditions in a volume of airspace. A controller is operatively connected to the sensor. The controller includes machine readable instructions configured to cause the controller to predict persistence of contrails on an intended route through the volume of airspace and to determine an improved route and/or propulsion operation to reduce contrail formation and persistence relative to the intended route.

The machine readable instructions can be configured to output the improved route and/or propulsion operation to reroute a flight in progress. The controller can be onboard the flight in progress. The controller can be surface based, wherein the controller is operatively connected to communicate the improved route and/or propulsion operation to the flight in progress. The controller can be space-based and/or part of a satellite network. The controller can be based on a communication network of aircraft.

The machine readable instructions can be configured to output the improved route and/or propulsion operation to plan one or more future flights. The machine readable instructions can be configured to determine the improved route and/or propulsion operation based at least in part on fuel efficiency. The machine readable instructions can be configured to alter at least one of aircraft flight parameter, map course and altitude course from the intended route to determine the improved route and/or propulsion operation. The sensor can include at least one sensor of a type selected from the group consisting of: an optical sensor system onboard an aircraft; a network of optical sensor systems onboard an aircraft; surface weather sensor systems; a network of surface weather sensor systems; and an orbital optical sensor system.

The machine readable instructions can include instructions configured to cause the controller to reroute subsequent flights after a sensor onboard a prior flight following the intended route detects formation of persistent contrails on the prior flight so the subsequent flights follow the improved route and/or propulsion operation. The machine readable instructions can include instructions configured to cause the controller to predict formation of persistent contrails on the intended route and to reroute all flights from the intended route to the improved route and/or propulsion operation for a period of time as long as conditions for the formation of persistent contrails on the intended route persist.

These and other features of the systems and methods of the subject disclosure will become more readily apparent to those skilled in the art from the following detailed description of the preferred embodiments taken in conjunction with the drawings.

### BRIEF DESCRIPTION OF THE DRAWINGS

So that those skilled in the art to which the subject disclosure appertains will readily understand how to make and use the devices and methods of the subject disclosure without undue experimentation, preferred embodiments thereof will be described in detail herein below with reference to certain figures, wherein:
Fig. 1 is a schematic perspective view of an embodiment of a system constructed in accordance with the present disclosure, showing an aircraft with contrail volumes and sensor volumes for detecting background and contrail data;
Fig. 2 is a schematic view of the system of Fig. 1, showing the controller and some of the sensors connected to the controller; and
Fig. 3 is a schematic view of an airspace with a system as in Fig. 1, showing re-routing and route planning based on predicted contrail persistence.

### DETAILED DESCRIPTION OF THE PREFERRED EMBODIMENTS

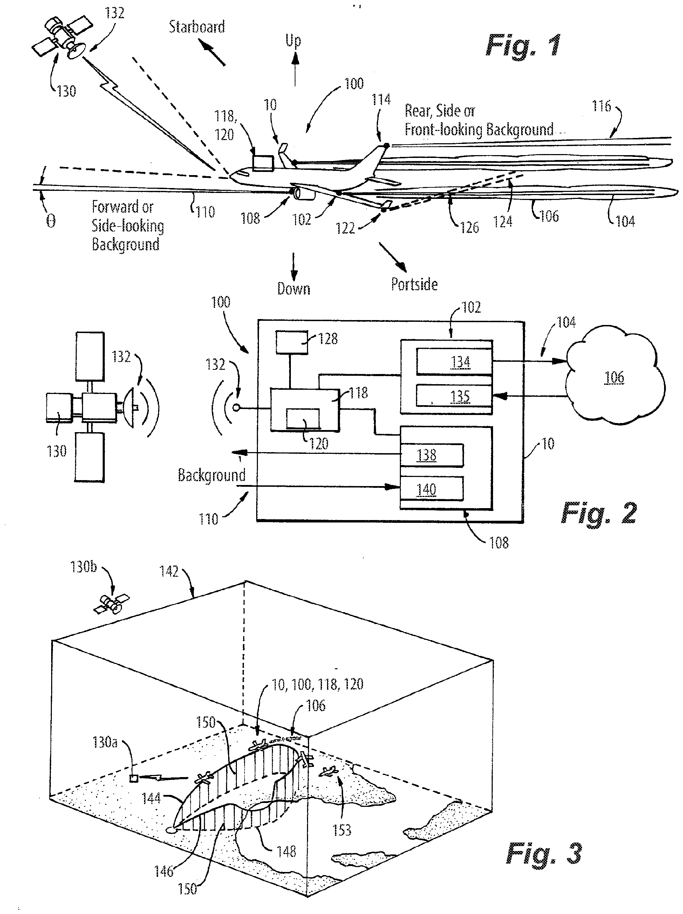

Reference will now be made to the drawings wherein like reference numerals identify similar structural features or aspects of the subject disclosure. For purposes of explanation and illustration, and not limitation, a partial view of an embodiment of a system in accordance with the disclosure is shown in Fig. 1 and is designated generally by reference character 100. Other embodiments of systems in accordance with the disclosure, or aspects thereof, are provided in Figs. 2-3, as will be described. The systems and methods described herein can be used to detect contrails, discriminate between fleeting and persistent contrails, and control to reduce or avoid formation of persistent contrails.

The system 100 includes a first sensor 102 positioned to sense presence of a contrail in a first volume 104, e.g. in the interrogation cone of the sensor 102. The first volume at least partially overlaps an expected volume of a contrail 106 proximate to and aft of an aircraft 10, i.e. the volume where a contrail 106 would appear if conditions are conducive to contrail formation. A second sensor 108 is positioned to sense a background reference in a second volume 110, i.e. in the interrogation cone of the sensor 108. In order to better determine a background reference, e.g. to determine whether the aircraft 10 is in a cloud that the first sensor 102 could detect instead of a contrail, the sensor 108 is directed forward from the aircraft 10 so the second volume 110 does not overlap the expected volume of a contrail 106 proximate an aircraft 10. Other suitable directions, indicated by the directional arrows in Fig. 1, for the sensor 108 to be directed include upwards from the aircraft 10, downwards from the aircraft 10, outward in either lateral direction (port or starboard) from the aircraft 10, or backwards from the aircraft 10 in a volume where contrails are not expected to form, e.g. from sensor 114 at the top of the tail of the aircraft with its interrogation cone 116 directed aft but not overlapping with the expected contrail volumes of any engine of the aircraft 10. This could include sensor 114 facing aft between two contrails 106, or aft below the contrails 106. Any oblique combination of these directions that does not overlap with the expected contrail volume of the engines of the aircraft 10 can also be used for background data. Each sensor can have a conical interrogation volume, defined by a conical angle 0, which is labeled on volume 110.

A controller 118 is operatively connected to the first and second sensors 102, 108. The controller 118 includes machine readable instructions 120 (indicated in Fig. 3) configured to cause the controller 118 to utilize data input from both the first and second volumes 104, 106 to determine if a contrail is present from the aircraft. For example, the controller 118 can include logic configured to compare input from the sensors 102, 108. If data input to the controller 118 from both sensors 102, 108 indicate presence of water and/or ice particles, the controller 118 can include logic to conclude the aircraft 10 is not forming a contrail 106. Similarly, if the data input from both sensors 102, 108 indicate lack of water and/or ice particles, the controller 118 can include logic to conclude aircraft 10 is not forming a contrail 106. But if the data input from the first sensor 102 indicates presence of water and/or ice particles, and the data input from the second sensor 108 indicates lack of water and/or ice particles, the controller 118 can include logic to conclude the aircraft 10 is forming a contrail 106.

With continued reference to Fig. 1, if a contrail is present, it is important to know whether the contrail will persist or will disappear quickly. There is little if any global warming impact from a contrail that disappears quickly-the contrails that have a substantial impact are those that persist long after the aircraft has passed. A third sensor 122 can be positioned to sense presence of a contrail in a third volume 124, i.e. in the interrogation cone of the sensor 122. The third volume 124 at least partially overlaps the expected volume of a contrail 106 at a position 126 downstream in the contrail 106 relative to the aircraft 10. One or more additional sensors like sensor 122 can optionally be used to interrogate different downstream positions of the contrail 106 (if a contrail 106 is present). The third sensor 122 and/or additional sensors can be optical sensors, or any suitable non-optical type sensors capable of collecting relevant environmental data. The controller 118 is operatively connected to the third sensor(s) 122 and includes machine readable instructions 120 configured to cause the controller 118 to predict persistence of a contrail 106, if present, based on comparison of data from the first and third volumes. The controller includes machine readable instructions 120 configured to cause the controller to base its prediction of persistence of a contrail, if present, on data from the second volume 110 as well. This can allow correlation of factors such as presence of cirrus clouds, non-contrail water/ice in background, and the like.

With reference now to Fig. 2, wherein the aircraft 10 and system 100 are indicated schematically, the machine readable instructions 120 are configured to cause the controller 118 to receive additional sensor data, e.g. from onboard environmental sensors 128 configured to sense altitude, at least one of ambient temperature, humidity, pressure, particulate count information (which can be indicative of likelihood of nucleating contrails), and/or presence of polyaromatic hydrocarbons (which can be a factor in calculating persistence of contrails) outside of the aircraft 10, and/or weather data from an external satellite or ground/surface source 130 received wirelessly as indicted by the antennae 132 in Fig. 2. The machine readable instructions 120 can cause the controller 118 to compare data from the first and second volumes 104, 110 in conjunction with the additional sensor data to predict persistence of a contrail 106 if present.

The first sensor 102 includes a first LIDAR illuminator 134 configured to illuminate the first volume 104 and a first photodetector 135 configured to receive a return from the first illuminator 134, as indicated by the large arrows into and out of the sensor 102 in Fig. 2. The second sensor 108 includes a second LIDAR illuminator 138 configured to illuminate the second volume 110 and a second photodetector 140 configured to receive a return from the second illuminator 138, as indicated by the large arrows into and out of the sensor 108 in Fig. 2. The machine readable instructions 120 include instructions configured to cause the controller 118 to convert time of flight data from the first and second sensors 102, 108 into data indicative of presence or lack of presence of water and/or ice particles.

With reference now to Fig. 3, the aircraft 10 and system 100 can use the sensors 102, 108, 128, or from the external source 130, to sense data indicative of atmospheric conditions in a volume 142 of airspace. The controller 118 includes machine readable instructions 120 configured to cause the controller 118 to predict persistence of contrails 106 on an intended route 144 through the volume 142 of airspace and to determine an improved route 146 to reduce contrail formation and persistence relative to the intended route 144. Each route 144, 146 includes a map path 148, and altitude path 150, represented by the vertical bars between each route 144, 146 and the map path 148. The improved route 146 can have a different map path 148 and/or a different altitude path 150 from the intended route 144. It is also contemplated that in addition to or in lieu of determining an improved route 146, an improved operation of the aircrafts propulsion system can be determined and followed, e.g. if changing the fuel to air ratio or other engine/propulsion parameters can be adjusted even temporarily to reduce particulate formation and mitigate contrail formation with or without a change in the route.

The machine readable instructions 120 are configured to output the improved route 146 to reroute a flight in progress, i.e. to reroute the aircraft 10 in Fig. 3 off from its position on the intended route 144 to the improved route 146. The controller 118 can be onboard the aircraft 10 during the flight in progress. It is also contemplated that the controller 118 can be surface based, e.g. in the station 130a of Fig. 3, or air or space borne, as in the satellite 130b in Fig. 3 or a space-based network of satellites, and/or in a network of aircraft such as drones or the flights as shown in Fig. 3, wherein the controller 118 is operatively connected to communicate the improved route to the flight in progress, and to receive background, contrail, and/or contrail persistence data from the aircraft 10 using one or more of the sensors described above onboard the aircraft 10.

The machine readable instructions 120 can be configured to output the improved route 146 to plan one or more future flights 153, which might otherwise be planned to follow the intended route 144 or a similar route in or through the airspace volume 142. The machine readable instructions can be configured to determine the improved route based at least in part on fuel efficiency for the aircraft 10 and/or subsequent aircraft 153. The sensors for the system 100 (whether it is ground, surface, air, or space based) can include one or more of an optical sensor systems onboard an aircraft, e.g. sensors 102, 108, 114, 128 described above with reference to Figs. 1 and 2; a network of optical sensor systems onboard an aircraft; surface weather sensor systems, e.g. from station 130a; a network of surface weather sensor systems; and/or an airborne or orbital optical sensor system such as satellite 130b.

The machine readable instructions 120 can include instructions configured to cause the controller 118 to reroute subsequent flights 153 after a sensor onboard a prior flight, e.g. the aircraft 10 in Fig. 3, following the intended route 144 detects formation of persistent contrails 106 on the prior flight so the subsequent flights 153 can follow the improved route 146 to reduce or eliminate persistent contrails 106. The machine readable instructions 120 can include instructions configured to cause the controller 118 to predict formation of persistent contrails on the intended route 144 and to reroute all flights 10, 153 from the intended route 144 to the improved route 146 for a period of time as long as conditions for the formation of persistent contrails 106 on the intended route 144 persist.

The methods and systems of the present disclosure, as described above and shown in the drawings, provide for detection, discrimination, and control of contrails with the potential to improve climate change for the better. While the apparatus and methods of the subject disclosure have been shown and described with reference to preferred embodiments, those skilled in the art will readily appreciate that changes and/or modifications may be made thereto without departing from the scope of the subject disclosure.

## Claims

1. A system comprising:
a first sensor (102) positioned to sense presence of a contrail in a first volume (104), wherein the first volume (104) at least partially overlaps an expected volume of a contrail (106) proximate to an aircraft;
a second sensor (108) positioned to sense a background reference in a second volume (110), where the second volume (110) does not overlap the expected volume of a contrail (106) to proximate an aircraft; and
a controller (118) operatively connected to the first and second sensors (102, 108), wherein the controller (118) includes machine readable instructions configured to cause the controller (118) to use data input from both the first and second volumes (104, 110) to determine if a contrail is present from the aircraft.

2. The system as recited in claim 1, further comprising:
a third sensor (122) positioned to sense presence of a contrail in a third volume (124), wherein the third volume (124) at least partially overlaps the expected volume of a contrail (106) at a position downstream in the contrail, and wherein the controller (118) is operatively connected to the third sensor and includes machine readable instructions configured to cause the controller (118) to predict persistence of a contrail, if present, based on comparison of data from the first and third volumes.

3. The system as recited in claim 1 or 2, wherein the controller (118) includes machine readable instructions configured to cause the controller (118) to:
predict persistence of a contrail, if present, based on data from the second volume (110).

4. The system as recited in claim 3, wherein the machine readable instructions are configured to cause the controller (118) to receive additional sensor data and comparing data from the first and second volumes (104, 110) in conjunction with the additional sensor data to predict persistence of a contrail if present, wherein the additional data includes at least one of ambient temperature, humidity, pressure, particulate count information, and presence of polyaromatic hydrocarbons, wherein the additional data comes from sensors onboard the aircraft or from an external source.

5. The system as recited in any preceding claim, wherein the first sensor (102) includes:
a first illuminator (134) configured to illuminate the first volume (104) and a first photodetector (135) configured to receive a return from the first illuminator (134); and wherein the second sensor (108) includes:
a second illuminator (138) configured to illuminate the second volume (110) and a second photodetector (140) configured to receive a return from the second illuminator (138),
wherein the machine readable instructions include instructions configured to convert time of flight data from the first and second sensors (102, 108) into data indicative of presence or lack of presence of particles.

6. The system as recited in any preceding claim, wherein the first sensor (102) is directed in an aft direction relative to the aircraft so that the first volume (104) is aft of the aircraft.

7. The system as recited in claim 6, wherein the second sensor (108) is directed in a direction selected from the list consisting of:
forward relative to the aircraft,
starboard relative to the aircraft,
port relative to the aircraft,
above the aircraft,
below the aircraft; and
between two contrail zones aft of the aircraft, and preferably wherein the first sensor (102) is an optical sensor, and wherein the second sensor (108) is a non-optical sensor.

8. A system comprising:
a sensor configured to sense data indicative of atmospheric conditions in a volume of airspace;
a controller (118) operatively connected to the sensor, wherein the controller (118) includes machine readable instructions configured to cause the controller (118) to predict persistence of contrails on an intended route through the volume of airspace and to determine an improved route and/or propulsion operation to reduce contrail formation and persistence relative to the intended route.

9. The system as recited in claim 8, wherein the machine readable instructions are configured to output the improved route and/or propulsion operation to reroute a flight in progress, and preferably wherein the controller (118) is onboard the flight in progress, and more preferably wherein the controller (118) is surface based, wherein the controller (118) is operatively connected to communicate the improved route and/or propulsion operation to the flight in progress.

10. The system as recited in claim 8 or 9, wherein the machine readable instructions are configured to output the improved route and/or propulsion operation to plan one or more future flights.

11. The system as recited in any of claims 8-10, wherein the controller (118) is space-based and/or part of a satellite network.

12. The system as recited in any of claims 8-11, wherein the controller (118) is based on a communication network of aircraft.

13. The system as recited in any of claims 8-12, wherein the machine readable instructions are configured to determine the improved route and/or propulsion operation based at least in part on fuel efficiency.

14. The system as recited in any of claims 8-13, wherein the machine readable instructions are configured to alter at least one of map course and aircraft flight parameter from the intended route to determine the improved route and/or propulsion operation.

15. The system as recited in any of claims 8-14, wherein the sensor includes at least one sensor of a type selected from the group consisting of:
an optical sensor system onboard an aircraft;
a network of optical sensor systems onboard an aircraft;
surface weather sensor systems;
a network of surface weather sensor systems; and
an orbital optical sensor system, and preferably:
wherein the machine readable instructions include instructions configured to cause the controller (118) to reroute subsequent flights after a sensor onboard a prior flight following the intended route detects formation of persistent contrails on the prior flight so the subsequent flights follow the improved route and/or propulsion operation, and more preferably wherein the machine readable instructions include instructions configured to cause the controller (118) to predict formation of persistent contrails on the intended route and to reroute all flights from the intended route to the improved route and/or propulsion operation for a period of time as long as conditions for the formation of persistent contrails on the intended route persist.
